# EUROPEAN PATENT APPLICATION

(11) **EP 4 588 582 A1**
(43) Date of publication of application: **23.07.2025**
(21) Application number: 24461513.4
(22) Date of filing: 17.01.2024
(51) Int. Cl.: B08B 9/08, B08B 3/12

(54) **TANK CLEANING ARRANGEMENT**

(71) Applicant: Goodrich Corporation, Charlotte, NC 28217 (US)
(72) Inventor: KROCZEK, Piotr Jacek, 51-317 Wroclaw (PL); TUREK, ukasz, 51-317 Wroclaw (PL)
(74) Representative: Dehns

(57) **Abstract**

A cleaning arrangement for cleaning an interior volume of a tank (200), the arrangement comprising: a plurality of ultrasonic transducers (310, 3100) mounted to a support body (320, 3200) to be mounted to the tank (200), in use, and means (330, 3300) for providing electrical power to the transducers (310, 3100), wherein the transducers are mounted to the support body (320, 3200) such that, when the support body is mounted to the tank (200), in use, and when power is supplied to the transducers (310, 3100), the transducers generate ultrasonic waves throughout the interior of the tank (200).

## Description

### TECHNICAL FIELD

The present disclosure relates to ways of cleaning the interior of a tank such as, but not exclusively, a waste tank e.g. in an aircraft.

### BACKGROUND

Tanks or reservoirs containing matter such as waste from a sanitation system, or other matter, which may be contaminated or hazardous or generally undesirable if left on the inner surfaces of the tank for a period of time often include a device that extends into and sprays water or some cleaning fluid around the tank to clean the tank. This can avoid the need for manual cleaning of the tank which can be unpleasant or even dangerous. Furthermore, the tanks are often too small to enable a person to access the interior to clean it properly, or the tank may be vacuum sealed and so not accessible for manual cleaning and/or access to the tanks may be too difficult for the tank to be cleaned by a person. Passenger aircraft include large tanks for human waste from the aircraft toilets. These tanks are emptied after a flight and the inside of the tank is cleaned. This is usually done by means of a device, known as a rinse nipple, having nozzles through which pressurised water or a cleaning solution is sprayed around the interior of the tank.

A conventional rinse nipple includes a housing part to which a rinse hose providing the cleaning fluid is connected. The housing extends through the tank wall. A rinse head is provided at the end of the housing located inside the tank. The rinse head is provided with multiple openings or nozzles and the pressurised fluid is ejected out through the nozzles to clean the tank. Some rinse nipples have a rotatable rinse head. To avoid the need for power to be supplied to rotate the rinse head, the openings or nozzles are angled and offset relative to the axis of rotation of the head. This positioning provides momentum about the axis to cause the head to spin about the axis thus maximising the coverage of the fluid inside the tank.

Whilst the multiple nozzles and spinning head ensures that the fluid is sprayed as much as possible around the tank interior, due to the presence of various components and fittings that may be provided on the tank walls, extending to the tank interior, there may be some areas that are effectively obstructed or hidden by these components and are not reached by the spray from the spinning head. Furthermore, particularly when the tanks are large. The fluid may not reach the bottom of the tank, or may not reach the bottom with sufficient force to provide effective cleaning. This can result in waste material or the like remaining in those areas where the pressurised fluid does not reach, and clogging or building up. The tank cannot, therefore, be fully purged of all of the waste, which can cause contamination of the tank. There is, therefore, a need for a cleaning arrangement that can ensure that a greater area of the tank interior is contacted by the cleaning fluid.

### SUMMARY

According to the present disclosure, there is provided a cleaning arrangement for cleaning an interior volume of a tank, the arrangement comprising: a plurality of ultrasonic transducers mounted to a support body to be mounted to the tank, in use, and means for providing electrical power to the transducers, wherein the transducers are mounted to the support body such that, when the support body is mounted to the tank, in use, and when power is supplied to the transducers, the transducers generate ultrasonic waves throughout the interior of the tank.

In one arrangement, the transducers are mounted to the outside of the tank. They may be mounted to a plate that is secured to the exterior of the tank to position the transducers against the exterior wall of the tank. Power supply tracks or conductors may be provided on or incorporated into the plate to provide power to the transducers.

In another arrangement, the transducers are mounted to a support body e.g. a tube or rod type body that is mounted to extend into the interior of the tank such that the transducers are located inside the tank.

A tank including such arrangements, and a cleaning method are also provided.

### BRIEF DESCRIPTION

Examples of the cleaning arrangement according to this disclosure will be described with reference to the drawings. It should be noted that these are merely examples and variations are possible within the scope of the claims.
Figure 1 shows an example of a known tank and rinse arrangement for the purposes of explanation.
Figure 2 shows an example of a tank having a cleaning arrangement according to this disclosure.
Figure 3 shows a cross-section of a tank having a cleaning arrangement of the example of Fig. 2.
Figure 4A shows an example of the cleaning arrangement of Figs. 2 and 3.
Figure 4B illustrates how the arrangement of Fig. 4A can be mounted to a tank.
Figure 5A shows an alternative view of the cleaning arrangement of Figs. 4A and 4B.
Figure 5B shows a detail of Fig. 5A.
Figure 6 shows a tank with an alternative cleaning arrangement according to the disclosure.
Figure 7 shows the cleaning arrangement of Fig. 6, in more detail.

### DETAILED DESCRIPTION

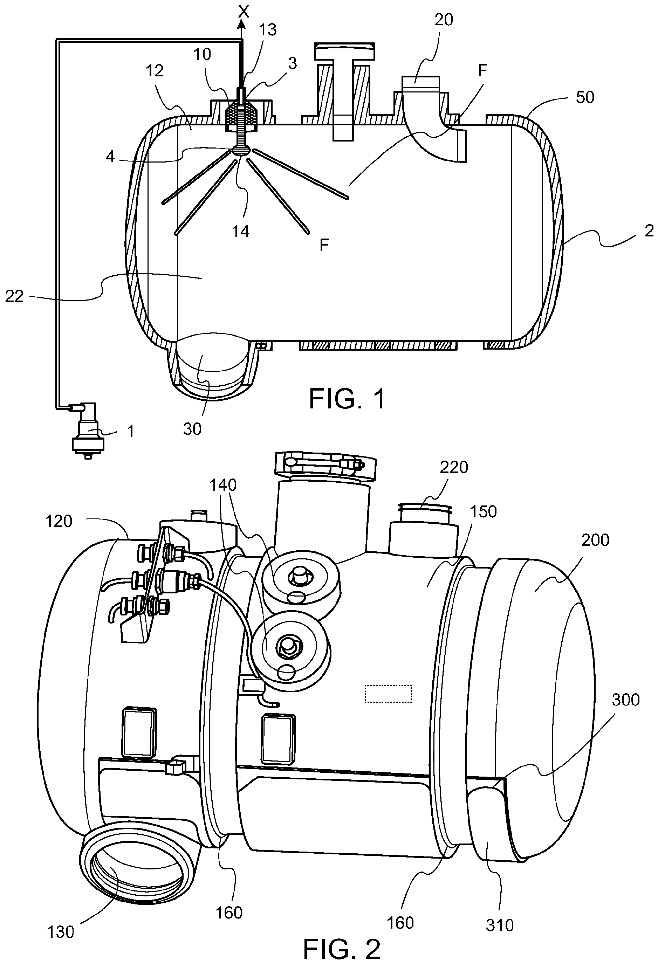

A typical rinse device is shown in Fig. 1. A rinse nozzle 3 is shown mounted in the wall 12 of a tank 2 or vat or other reservoir. In the example shown, the tank 2 has an inlet 20 and a drain or outlet 30 and a rinse port 1. Level sensors or other components may also be mounted to the tank. In this example, the tank 2 is a metal tank. Insulation 50 may be provided around the outside of the tank. The rinse nozzle 3 is connected, in use, to the rinse port 1 from which rinse fluid is provided to the rinse nozzle from a rinse fluid supply. Figure 1 shows, in cross-section, the rinse nozzle 3 mounted in the wall 12 of the tank 2, at the top of the tank. Apertures or jets 4 are formed in the nozzle 3 such that as rinse fluid is provided to the nozzle 3 it is sprayed out through the jets 4 around the interior 22 of the tank to clean the tank. A typical nozzle 3 comprises a housing 10, one end of which is provided with a fitting 13 arranged to be attached to a pipe or the like via which pressurised water or cleaning solution is provided. At the other end of the housing through which the pressurised fluid flows, which extends into the tank, is mounted a rinse head 14 mounted to rotate relative to the housing 10. The rinse head is arranged to rotate about an axis of rotation X which is the axis through the housing from the one end to the other end.

The rinse head 14 is provided with a number of holes or jets 4 via which the pressurised fluid F forced through the housing is ejected into the tank. The jets can be positioned offset from the axis of rotation and at angles such that the ejection of the pressurised fluid F provides a force that causes the rinse head 14 to rotate relative to the housing about the axis X.

The pressurisation of the fluid and the rotation of the rinse head provides a good range of coverage of the interior of the tank with cleaning fluid. In some cases, however, areas may exist, due to the presence of other components on the inside of the tank, that fluid from the rinse head cannot reach. Alternatively, because the rinse nozzle is typically small and mounted into the top of the tank, the pressurized fluid F may not adequately reach the bottom or other locations in the interior of the tank, or at least not with sufficient force to adequately clean the tank. Furthermore, as can be seen in Fig. 1, the jets do not clean the tank in a symmetrical manner.

The cleaning arrangement according to this disclosure is designed to address these problems as will be described with reference to Figs. 2 to 7. The arrangement will be described in relation to a tank similar to that shown in Fig. 1, for ease of explanation. It should be noted that the cleaning arrangement may be used with other types of tank of reservoir having an interior to be cleaned.

Figure 2 shows an example of a tank 200 to which a cleaning arrangement according to this disclosure can be mounted. As with the tank of Fig. 1, the tank has a tank wall 120 defining the tank interior volume, a waste or other fluid inlet port 220 via which the tank contents e.g. waste, enter the tank and a drain port 130 via which the content exits the tank when the tank is emptied. In the example shown, level sensors 140 are mounted to the tank. Insulation or cladding 150 is fitted around the outside of the tank. This may be secured around the tank by e.g. straps 160.

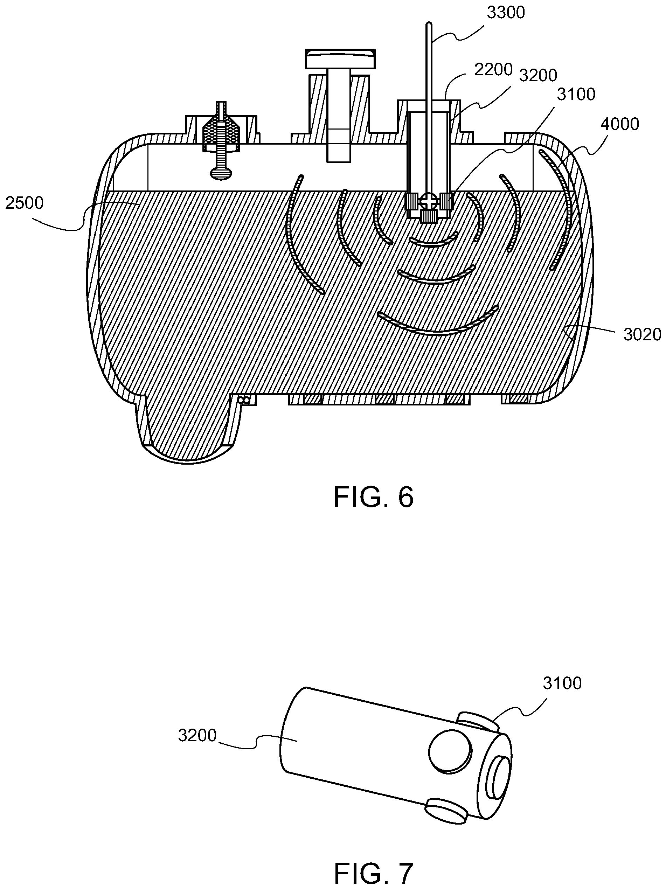

In one example, the cleaning arrangement 300, described further below, is mounted to the outside of the tank. In another example, described later with reference to Figs. 6 and 7, the cleaning arrangement is mounted to extend into the tank interior.

The cleaning arrangement of this disclosure comprises a plurality of ultrasonic transducers on a support body that is mounted relative to the tank so that, when powered, the transducers generate ultrasound waves that propagate inside the tank. The tank contains fluid e.g. water and, in some examples, detergent. The ultrasonic waves or vibrations cause agitation of the fluid in the tank which produces high speeds voids in the fluid, these voids or bubbles impact the inner surface of the tank and implode on impact and the power of the implosion causes disintegration of debris on the inner surface. The disintegrated debris therefore no longer adheres to the tank wall and can be flushed away with the fluid, via the drain. The use of detergent in the fluid in the tank, particularly a mild alkaline detergent, improves the cleaning effect, but even without detergent, the ultrasonic vibrations will loosen the debris on the tank surface. This ultrasonic cleaning is a relatively gentle, non-abrasive method which reduces damage to the tank walls and also to other components e.g. sensors etc. inside the tank.

In the example of Figs. 2 to 5, the ultrasonic transducers 310 are mounted to a plate 320. The plate 320 can then be mounted to the tank such that the transducers 310 are adjacent the exterior wall 301 of the tank in contact with, or sufficiently close to the tank wall 301 to generate ultrasonic waves in the fluid 250 (e.g. water or waste and, if desired, mixed with detergent) inside the tank when electrical power is provided to the transducers 310.

If the tank has insulation or cladding 150, the plate 320 may be mounted over the cladding so that the transducers press into the cladding to compress it where the transducers are located, or cavities can be formed in the cladding to accommodate the transducers and allow them to contact the tank wall 301. In other examples, the cladding could be removed where the plate is mounted to the tank.

The plate 320 may be secured to the tank 200 e.g. by straps 160, which may be the same straps used to secure the insulation 150, but other ways of securing the plate are also possible.

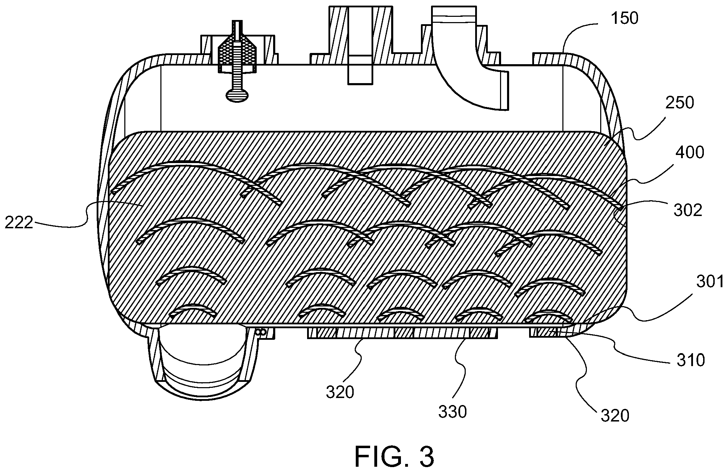

As seen in Fig. 3, when the transducers 310 are powered, they generate ultrasonic waves 400 that propagate through the fluid 250 in the tank, agitating the fluid to create bubbles that implode on the inner surface 302 of the tank to dislodge any debris on that surface. These bubbles are created through the entire interior 222 of the tank and impact the entire inner surface 203, thus providing thorough cleaning of the entire tank.

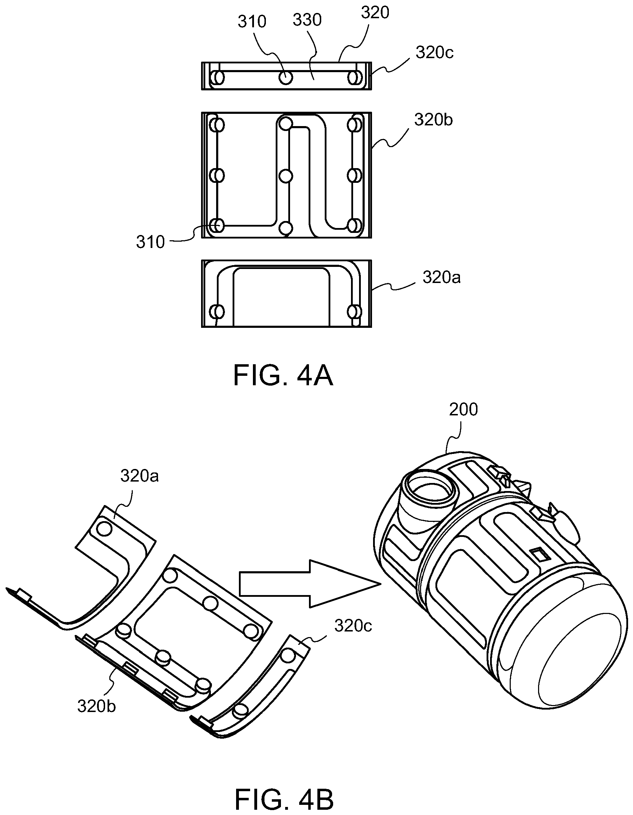

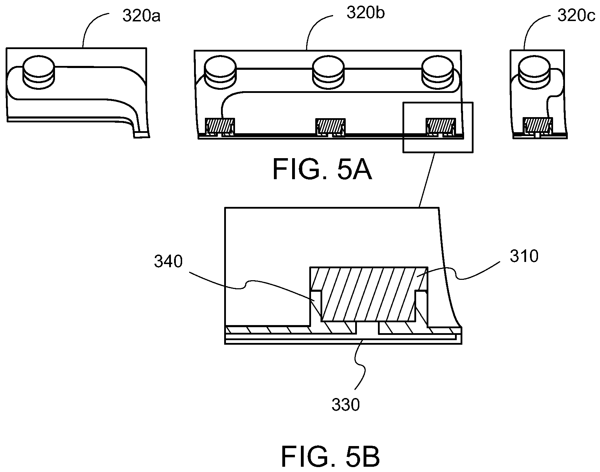

An example of a plate 320 is shown in Figs. 4A, 4B, 5A and 5B, but it should be noted that the transducers can be mounted to other types and forms of support body.

In the example shown, to match the structure of the tank and the insulation of the tank of Fig. 2, and to allow the arrangement to be easily mounted to existing tanks without them having to be re-designed, the plate 320 may be formed in several (here three) sections 320a, 320b, 320c each having one or more transducers 310 mounted thereto. Of course, other structures can be used for mounting the transducers, including a one-piece plate. The transducer can be mounted to the plate in a variety of ways e.g. by threaded fastening or by some form of bonding.

Electrical power needs to be supplied to the transducers. This may be by conductive wires or cables of tracks. In the example shown, a cable harness 330 may run along or around the plate connecting the transducers to a power supply. The harness or other conductor may be located in a recess formed in the plate. The plate may also be provided with flanges or lips or other holding features 340 for the transducers. The plate or plate sections can then be mounted to the outside of the tank as shown in Fig. 5B. In an example, it may be possible to provide a track or harness to either end of which power can be supplied. This simplifies application of power where access may be difficult due to space restrictions around the tank.

In another example, shown in Figs, 6 and 7, the transducers 3100 are mounted to a support body 3200 that can be mounted to the tank to extend into the tank so that the transducers are located inside the tank. This support body may be a rod or shaft or a tube such as shown in Fig. 6 and 7, but other shapes are clearly possible. With a cylindrical support body as shown, the cleaning arrangement can be easily mounted to the tank through existing ports 2200 without modification of the tank.

The support body 3200 is mounted to the tank so that the transducers 3100 extend into the fluid 2500 in the tank. When powered or activated, the transducers generate ultrasonic waves 4000 that propagate through the fluid and, as described above, create bubbles that implode against the inner surface of the tank to dislodge any debris. Power may be provided to the transducers 3100 by means of a conductor 3300 that extends from outside the tank through the support body 3200 to the transducers 3100. Other ways of providing power to the transducers are also possible. For improved cleaning, the tank can be filled with fluid and/or detergent to such a level that the transducers 3100 are submerged. This will, again, ensure a thorough cleaning of the inner surface 3020 of the tank.

Whilst the ultrasonic effect of transducers mounted to the outside of the tank is improved with metal tanks, the cleaning arrangement described herein can be used with a variety of reservoirs including metal and non-metal tanks.

The locations of the cleaning arrangement described above are examples only, and the cleaning arrangement can be placed at any suitable location relative to the tank, which allows tanks in many different environments to be cleaned.

Compared to rinse nozzles, this cleaning arrangement requires less time and less power and also less water. The simple design construction of the cleaning arrangement can be fitted to existing tanks without modification of the tank and is able to reach more of the tank interior in a simple, efficient manner.

## Claims

1. A cleaning arrangement for cleaning the interior of a tank containing fluid, the cleaning arrangement comprising: a plurality of ultrasonic transducers (310, 3100) mounted to a support body (320, 3200) to be mounted to the tank (200), in use, and means (330, 3300) for providing electrical power to the transducers, wherein the transducers are mounted to the support body such that, when the support body is mounted to the tank, in use, and when power is supplied to the transducers, the transducers generate ultrasonic waves throughout the interior of the tank.

2. The cleaning arrangement of claim 1, wherein the support body is configured to mount the transducers to an exterior of the tank.

3. The cleaning arrangement of claim 2, wherein the support body comprises a plate (320) to which the transducers are mounted, the plate configured to be mounted to an exterior wall of the tank such as to bring the transducers into contact with the exterior wall (301).

4. The cleaning arrangement of claim 3, wherein the plate comprises a plurality of separate plate sections (320a, 320b, 320c).

5. The cleaning arrangement of claim 3 or 4, wherein the means for providing electrical power comprises a conductor (330) located on or within the plate.

6. The cleaning arrangement of claim 5, wherein the conductor is located in a recess of the plate.

7. The cleaning arrangement of any of claims 2 to 6, wherein the means for supplying power has two ends to each of which power can be supplied.

8. The cleaning arrangement of claim 1, wherein the support body (3200) is configured to mount the transducers (3100) inside the interior of the tank.

9. The cleaning arrangement of claim 8, wherein the transducers are mounted around the support body that extends through the tank to locate the transducers in the interior of the tank.

10. The cleaning arrangement of claim 8 or 9, wherein the support body is a cylindrical or tubular body.

11. The cleaning arrangement of claim 8, 9 or 10, wherein the means for supplying power comprises a conductor extending through the support body to the transducers.

12. A tank defining an interior volume to be cleaned, the tank comprising a cleaning arrangement as claimed in any of claims 2 to 6 mounted to the exterior of the tank.

13. The tank of claim 12, wherein the tank has an exterior insulative cladding and wherein the cleaning arrangement is mounted to the cladding such that the transducers contact the tank exterior through.

14. A tank defining an interior volume to be cleaned, the tank comprising a cleaning arrangement as claimed in any of claims 8 to 11 extending into the interior of the tank.

15. A method of cleaning an interior of a tank comprising: mounting a cleaning arrangement as claimed in any of claims 1 to 14 to the tank, applying electrical power to the transducers to dislodge debris from the interior of the tank.
